# EUROPEAN PATENT SPECIFICATION

(11) **EP 3 811 832 B1**
(45) Date of publication and mention of the grant of the patent: **20.11.2024**
(21) Application number: 19863987.4
(22) Date of filing: 30.08.2019
(51) Int. Cl.: G10L 15/00, F24C 7/08, G06F 3/16, A47J 36/32, G06F 18/22

(54) **COOKING DEVICE HAVING CAMERA**
KOCHVORRICHTUNG MIT KAMERA
DISPOSITIF DE CUISSON ÉQUIPÉ D'UNE CAMÉRA

(43) Date of publication of application: 28.04.2021
(73) Proprietor: LG Electronics Inc., Seoul 07336 (KR)
(72) Inventor: HAN, Dayun, Seoul 08592 (KR); PARK, Yunsik, Seoul 08592 (KR); HWANG, Sungmok, Seoul 08592 (KR)
(74) Representative: Vossius & Partner Patentanwälte Rechtsanwälte mbB
(86) International application number: PCT/KR2019/011113
(87) International publication number: WO 2021/040095

(56) References cited:
- JP-A- 2018 534 514
- JP-A- 2018 534 514
- KR-A- 20010 073 929
- KR-A- 20190 043 830
- KR-B1- 100 395 545
- KR-B1- 101 737 498
- US-A1- 2010 147 823
- US-A1- 2010 147 823
- US-A1- 2018 187 898

## Description

### Technical Field

The present disclosure relates to a cooking device, and more particularly, to a cooking device for cooking a cooking target accommodated in a cooking space.

### Background Art

A cooking device means a device or home appliance for cooking a cooking target by applying heat to the cooking target. Examples of the cooking device may include a cooking device for cooking a cooking target by directly applying heat to a vessel in which the cooking target is accommodated, and a cooking device for cooking a cooking target by heating a cooking space after the cooking target is accommodated in the cooking space.

The cooking space or a cooking target accommodating space may be referred to as a cavity, and if a door is closed, an inner space of the cavity is isolated from an outer space of the cavity, and if the door is opened, the inner space of the cavity is communicated with the outer space of the cavity.

An oven which is one of the cooking device may be considered as one of home appliances in which a cooking target is cooked in the inner space of the cavity.

The oven may be divided into a light wave oven, an electromagnetic wave oven, a gas oven and an electric heater oven in accordance with a heating source, that is, a heating scheme. The oven may be more subdivided.

Since the cooking device such as oven cooks by accommodating a target in a certain space, it is difficult to check a cooking state with the naked eye. Therefore, it is difficult to check an optimal cooking state. For this reason, a transparent window may be provided in a door provided in front of the cooking device to allow a user to externally see a cooking target. However, since the transparent window is treated with a polarized film, it is not easy to check a cooking state of a target with the naked eye. Therefore, in most cases, the user repeatedly checks the cooking state of the target with the naked eye by opening the door.

A cooking time in the cooking device such as oven is relatively long. Therefore, repeated opening of the door may cause inconvenience of the user. For this reason, most of cooking devices provide recipes of cooking targets. That is, the cooking devices have cooking parameters suggested or set per recipe.

However, even though cooking is performed in accordance with a recipe which is set, most of users are likely to check a state of a cooking target by opening the door before cooking is finished.

Therefore, a cooking device that may effectively check a cooking state while minimizing door opening will be required. Also, a cooking device that may enhance cooking satisfaction using the existing cooking experiences will be required.

US2018187898 A1 discloses a cooking device comprising a camera and a transmission module, an user being enabled to compare images of the cooking target at different stages of the cooking process on a display.

US 2010/147823 (A1) relates to a cooking appliance including a user interface and control system for initiating and controlling a cooking operation.

JP 2018 534514 (A) relates to a cooking appliance that includes one or more heating elements; a cooking chamber; and a camera attached to the interior of the chamber.

### Summary

The present disclosure is intended to solve the aforementioned problems of the cooking device of the related art.

An object of the present disclosure is to provide a cooking device customized for a user by recognizing a cooking target through a camera.

Another object of the present disclosure is to provide a cooking device that may easily be used through a voice command. Particularly, the present disclosure is to provide a cooking device that may recognize a subjective and emotional control command and effectively reflect the control command.

Still another object of the present disclosure is to provide a cooking device that may allow a user to check a cooking target with the naked eye within a minimum range in the middle of cooking by providing a user with an image of the cooking target (cooking prediction image) predicted after cooking is finished.

Further still another object of the present disclosure is to provide a cooking device that may allow a user to more easily input manipulation or setting of a cooking parameter by changing a cooking prediction image to correspond to a change of the cooking parameter.

Further still another object of the present disclosure is to provide a cooking device having a convenient user interface by enabling an input of a cooking command or a cooking parameter through a cooking prediction image.

Further still another object of the present disclosure is to provide an advanced smart cooking device by applying artificial intelligence (AI) learning having a cooking command or a cooking parameter as an input and a cooking prediction image as an output.

Further still another object of the present disclosure is to provide a cooking device that may extend a user interface to an external terminal by enabling communication with an external server or the external terminal.

### Technical Solution

To achieve these objects and other advantages and in accordance with the purpose of the invention, according to one embodiment of the present disclosure, a cooking device and its control method may be provided, in which the cooking device comprises a cabinet; a cavity provided to accommodate a cooking target; a door rotatably provided in the cabinet, having a transparent window; a camera module provided to generate an image by capturing the cooking target accommodated in the cavity; a heating module heating and cooking the cooking target; a user interface provided to allow a user to input a cooking command or a cooking parameter that includes a cooking temperature and a cooking time; an artificial intelligence (AI) module outputting an image (cooking prediction image) of a cooking target predicted after cooking is finished by using transition of the cooking parameter from the start of cooking to a current timing as an input by means of learning; and a controller controlling driving of the camera module, the heating module and the AI module based on the cooking command or the cooking parameter.

In this case, the cooking command may be a cooking start command for a specific recipe. If the specific recipe is determined, a cooking parameter for the specific recipe may be set automatically.

The cooking parameter is a parameter for determining how to perform cooking. For example, the cooking parameter may include a cooking time or a cooking temperature. In more detail, a change of a cooking temperature according to passage of the cooking time may be the cooking parameter.

For example, a preheating temperature after cooking starts, a temperature in the middle of cooking, and a temperature at the end of cooking may be set differently.

Preferably, the cooking device further comprises a memory storing an image generated by capturing the cooking target.

Previously generated images may be stored in the memory. That is, images generated by a cooking device seller or manufacturer as well as images generated by a user while the user is directly using the cooking device may be stored in the memory. Also, images generated by other users while the other users are using the cooking device may be stored in the memory. That is, the images may be updated through a server.

Preferably, the memory classifies a plurality of images generated for the same cooking target in accordance with a cooking level based on a color change of the cooking target and then stores the images. Therefore, if there 10 images for the same cooking target, the images may be stored by being classified in accordance with a cooking level.

Preferably, if there is a specific image corresponding to the cooking prediction image in the images stored in the memory, the AI module outputs the specific image as the cooking prediction image.

If there is no specific image, the specific image may be output by being downloaded through the server. At this time, it is preferable that the respective images are stored to be matched with input factors. Also, the AI module may generate and output a new image through learning if there is no specific image.

That is, a difference of a cooking level may be checked through a color change of the cooking target. Therefore, a specific image may be generated through previous and following images of the cooking level if there is no specific image.

Preferably, the user interface is provided to display the cooking prediction image. To this end, the cooking device may be provided with a display or a touch display. The user does not check a cooking state of a cooking target with the naked eye in the middle of cooking due to the cooking prediction image. Therefore, it is very convenient to use the cooking device.

The user interface may include a mike module receiving a cooking command or a cooking parameter through a user's voice. The user may not directly select the cooking command or the cooking parameter. Therefore, it is very convenient to use the cooking device.

The cooking device may further comprise a voice recognition module classifying and recognizing an increase or decrease command of a relative cooking level based on the cooking prediction image from the user's voice received from the mike module.

The voice recognition module may be provided to recognize more subjective, emotional and relative command as well as a direct cooking parameter setting command such as cooking temperature increase or decrease or cooking time increase or decrease.

For example, the voice recognition module may recognize a voice command such as "rare", "well-done" and "medium" as a command indicating a relative increase or decrease of a cooking level. That is, the voice recognition module may recognize and reflect such a command from a cooking level predicted through a current cooking command or cooking parameter. Therefore, the voice recognition module may change and set the cooking parameter to be suitable for increase or decrease from a cooking level which is currently predicted.

The voice recognition module may recognize a difference in an increase or decrease level of a cooking level through a voice command. That is, the voice recognition module may recognize a difference in a cooking level of a command such as "well-done" and a command "very well-done". Therefore, a change width of the cooking parameter may be more increased.

The controller may reset a current cooking parameter based on the increase or decrease command of the relative cooking level recognized by the voice recognition module.

Preferably, if the cooking command or the cooking parameter is changed, the user interface displays the changed cooking prediction image. Therefore, the user may intuitively check how the cooking level is changed based on the reset cooking command or cooking parameter. Therefore, it is convenient to use the cooking device.

Preferably, the user interface provides the changed cooking time to correspond to the changed cooking prediction image.

Any one of the images stored in the memory is selected by a user and therefore the cooking command or the cooking parameter may be input to the cooking device. Therefore, the user may input a cooking command or a cooking parameter by viewing a cooking complete image without directly selecting the cooking command or the cooking parameter through various input means (for example, button or rotary knob) If the user selects the cooking complete image, a cooking command or a cooking parameter corresponding to such an image may be set. Therefore, the user may not need to determine and select the cooking command or the cooking parameter in a complicated manner.

The cooking device may further comprise a communication module for transmitting the cooking prediction image to an external terminal. Therefore, the cooking device may extend the user interface to the external terminal.

Generally, a display, especially a display for implementing a color image or video is not built in most of cooking devices. On the other hand, it is general that a touch display having high resolution is built in the external terminal, for example, even in case of a smart phone. Therefore, the user may use the external terminal like the user interface of the cooking device. In other words, the user interface of the cooking device may be extended to the external terminal.

The user may easily check a current state of the cooking device through various kinds of cooking information (cooking command, cooking parameter, cooking prediction image, cooking residual time, information as to whether cooking is performed, etc.) provided from the cooking device. Also, the user may easily perform the cooking command or a reset command of the cooking parameter. Particularly, the user may more easily reset the cooking command or the cooking parameter by using the cooking prediction image.

To this end, it is preferable that the cooking device further comprises a communication module. The cooking device may receive a change of the cooking command or the cooking parameter from the external terminal through the communication module.

The cooking device may perform communication with the external terminal through an external server. Of course, the cooking device may directly perform communication with the external terminal.

The cooking device may further comprise a communication module for delivering a learning result of the AI module to the external server.

The cooking device may further comprise a communication module for updating a previous learning result from the external server.

The camera module may detachably be provided outside a transparent window to enable communication with the controller, or may be provided inside the transparent window.

The camera module may generate an image by capturing the cooking target to recognize the cooking target prior to cooking.

If there is a cooking history for a conventional cooking target corresponding to the above cooking target, cooking prediction images may previously be stored. Therefore, the cooking prediction images which are previously stored may be provided to a user. The user may replace an input of the cooking command or the cooking parameter by selecting a specific cooking prediction image. This is because that the specific cooking prediction image is matched with a setting value of a specific cooking parameter or a specific cooking command.

The user interface may include a speaker providing a voice for guiding a cooking mode to a user based on the recognized cooking target.

Preferably, the user interface may be displayed to guide a cooking mode to a user based on the recognized cooking target. If the user interface may not be displayed, cooking mode information may be transmitted to the external terminal and therefore the cooking mode may be guided in the external terminal.

A communication module may be provided to perform communication with an external server, and may transmit cooking information to an external terminal through the external server and receive a cooking command from the external terminal through the external server.

The aforementioned features of the embodiments may be implemented in other embodiments in combination unless contradicted or exclusive.

### Advantageous Effects

According to one embodiment of the present disclosure, a cooking device customized for a user by recognizing a cooking target through a camera may be provided.

According to one embodiment of the present disclosure, a cooking device, which may easily be used through a voice command, may be provided. Particularly, a cooking device, which may recognize a subjective and emotional control command and effectively reflect the control command, may be provided.

According to one embodiment of the present disclosure, a cooking device, which may allow a user to check a cooking target with the naked eye within a minimum range in the middle of cooking by providing a user with an image (cooking prediction image) of the cooking target predicted after cooking is finished, may be provided.

According to one embodiment of the present disclosure, a cooking device, which may allow a user to more easily input manipulation or setting of a cooking parameter by changing a cooking prediction image to correspond to a change of the cooking parameter, may be provided.

According to one embodiment of the present disclosure, a cooking device having a convenient user interface by enabling a cooking command or a cooking parameter input through a cooking prediction image may be provided.

According to one embodiment of the present disclosure, an advanced smart cooking device by applying AI learning having a cooking command or a cooking parameter as an input and a cooking prediction image as an output may be provided.

According to one embodiment of the present disclosure, a cooking device, which may extend a user interface to an external terminal by enabling communication with an external server or the external terminal, may be provided.

### Brief Description of the Drawings

FIG. 1 illustrates an external appearance of a cooking device according to one embodiment of the present disclosure.
FIG. 2 illustrates that a door of a cooking device shown in FIG. 1 in greater detail.
FIG. 3 illustrates a control configuration of a cooking device according to one embodiment of the present disclosure.
FIG. 4 illustrates a control flow of a cooking device according to one embodiment of the present disclosure.
FIG. 5 illustrates an example of a cooking prediction image in a rare or underdone state of a cooking level is displayed in a user interface and/or an external terminal of a cooking device.
FIG. 6 illustrates an example of a cooking prediction image in a medium or done state of a cooking level is displayed in a user interface and/or an external terminal of a cooking device.
FIG. 7 illustrates an example of a cooking prediction image in a well-done state of a cooking level is displayed in a user interface and/or an external terminal of a cooking device.

### Best Mode for Carrying Out the Invention

Hereinafter, a cooking device according to one embodiment of the present disclosure will be described with reference to the accompanying drawings.

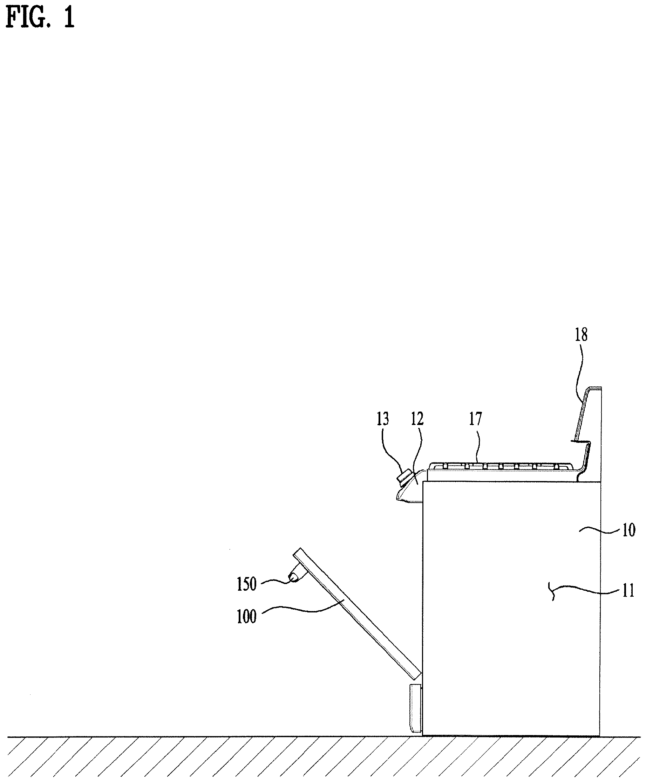

FIG. 1 illustrates a cooking device that may be applied to according to one embodiment of the present disclosure. In detail, a cooking device provided with a handle 150 on an upper surface in front of a door 100 and opened or closed while being rotated around a rotation center below the door.

The cooking device includes a cabinet 10 forming an external appearance, and a cavity 11 where cooking is performed is arranged inside the cabinet 10. This cavity may be referred to as a target accommodating unit. Likewise, the door 100 is rotatably provided in the cabinet 10, and the target accommodating unit 11 may be seen through the door 100. That is, a cooking state of the cooking target in the cavity may be checked.

A control panel 12 for user's manipulation may be provided in the cooking device, and may include a manipulation unit 13. An example of the manipulation unit may include a knob. The control panel may be provided with a selection means such as a button as well as a selection means such as a rotary knob. Also, a display for displaying a cooking time or a cooking state may be provided.

Therefore, the control panel 12 may be referred to as a user interface.

The cooking device may be provided with a cooktop 17, which forms a separate cooking area, at an upper portion of the cabinet 10. A rear display 18 may be provided if necessary. In this case, the rear display 18 may be a portion of the user interface.

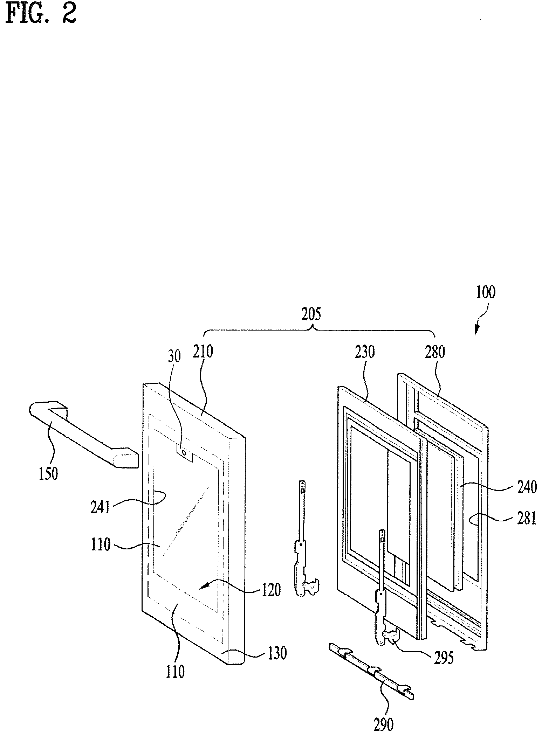

Hereinafter, a door structure of the cooking device shown in FIG. 1 will be described in detail with reference to FIG. 2. Preferably, the door structure has a structure tolerable at a high temperature because the inside (cooking space) of the cavity is a high temperature and stability from the high temperature may be given to a camera module.

The door 100 is connected with the cabinet 10 and provided to open or close the target accommodating unit 11 where a target is accommodated. The door 100 is provided with the handle 150 such that a user opens or closes the door 100 by gripping the handle 150.

The door 100 may include a plurality of frames. These frames may be combined with one another to form a door frame 205.

The door frame 205 may include an outer door 210 constituting a front surface of the door and a door liner 280 constituting a rear surface of the door. A predetermined space may be formed between the outer door 210 and the door liner 280.

An inner frame 230 may be provided between the outer door 210 and the door liner 280. Hollow portions 214, 231 and 281 may respectively be formed at the center of the frames 210, 230 and 280 to allow a user to see the target accommodating unit. The hollow portions form transparent windows 120. An insulation panel 240 and a front panel 110 corresponding to these windows may be provided.

The outer door 210 may be provided with the front panel 110. The front panel 110 may be coupled to the outer door 210 at the front of the outer door 210. However, it is preferable that the front panel 110 is coupled to the outer door 210 at the rear of the outer door 210.

The front panel 110 may be formed to be greater than the hollow portion 241 of the outer door 210. That is, the front panel 110 may be formed to completely shield the hollow portion. The front panel 110 may be formed of a glass material. The front panel 110 forms the front surface of the door 100 together with the outer door 210.

The front panel 110 may be an element to which a camera is fixed, while forming a transparent window. Therefore, a camera module 30 may be provided to be tightly fixed to the front panel 110.

The camera module 30 may tightly be fixed to the front panel 110 at the rear of the front panel 110. Of course, the camera module 30 may tightly be fixed to the front panel 110 at the front of the front panel 110. In any case, the camera module may be fixed to a position where the inside of the cavity may be captured through the transparent window.

The camera module 30 may detachably be provided in the door through a magnet or a separate bracket. In this case, the camera module may be provided to perform communication with a controller 100. The camera module may generate an image under the control of the controller and transmit the generated image to the cooking device.

A window panel 240 may be provided together with the front panel 110. Since the window panel 240 is provided for insulation, the window panel 240 may be referred to as an insulation panel. This insulation panel may be formed of multiple layers, and is preferably formed of a glass material.

A hinge 295 through which the door 100 is opened or closed may be provided inside the door 100. The home appliance may be a pull-down type door. Therefore, the hinge 295 may include a damper.

A shielding panel 290 may be formed below the door 100.

Meanwhile, unlike FIG. 2, the camera module 30 may be provided inside the door. The camera module may be buried in the door and fixed between the front panel and the insulation panel or between the insulation panels to allow heat to be directly transferred thereto.

The transparent window 120 may fully be treated with a polarizing film. However, image resolution may be deteriorated or it may be difficult to generate a definite image due to the treatment of the polarizing film.

Therefore, the treatment of the polarizing film may be excluded or minimized in the portion of the transparent window corresponding to the camera module.

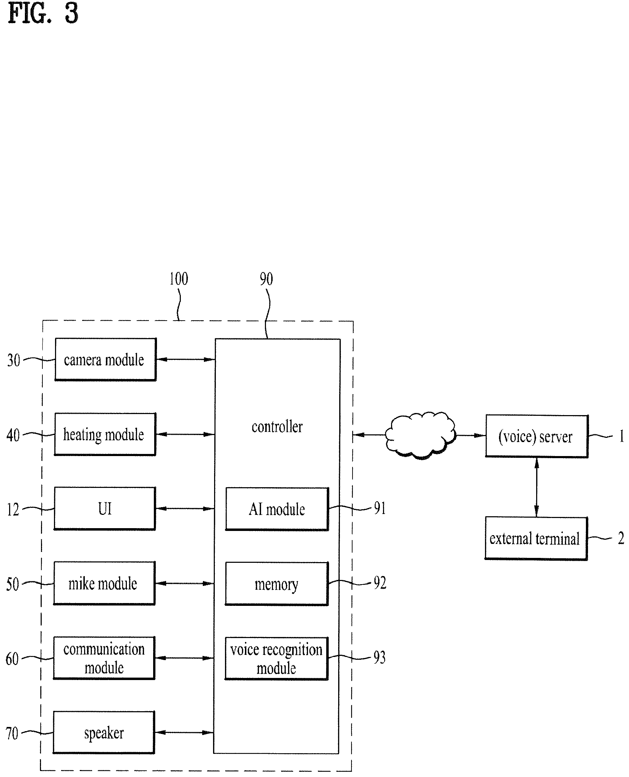

Hereinafter, a control configuration of the cooking device according to one embodiment of the present disclosure will be described in detail with reference to FIG. 3.

The camera module 30 is provided to generate an image by capturing a cooking target. The camera module 30 is provided to capture a cooking target accommodated in the cavity.

A condition inside the cavity may be considered as a very high temperature state. Therefore, it is required to protect the camera module from the high temperature. To this end, the camera module 30 may be provided at the front of the door. That is, the camera module 30 may be provided between on an outer surface of the door not an inner surface which is directly in contact with the cavity, or may be provided between the inner surface and the outer surface of the door.

Also, the camera module 30 may be provided detachably. The camera module may be fixed to or removed from the front surface of the door if necessary. In this case, the camera module may be provided to be connected with a controller 90 by communication.

A heating module 40 is provided to cook a cooking target through heating. The heating module 40 may be a module for heating the target like a gas heater or an electric heater, or may be a module for cooking the target by using microwaves. The controller 90 controls an operation time, an operation timing and operation conditions (temperature and output) of the heating module.

The user interface (UI) may be provided to allow a user to input a cooking condition and check a cooking state. The UI may include a display, and may display one or more of various images such as an image generated through the camera module, an image downloaded through a server and an image stored in a memory 92. The UI may display an image currently captured or an image captured in the past.

In detail, the UI may display an image currently captured and an image predicted after cooking is finished. Therefore, the user may intuitively check a current cooking level through the currently captured image and the predicted image.

A mike module 50 may be provided to recognize a voice command of a user. Therefore, the mike module 50 may be considered as a portion of the UI. Since a voice command may be performed through the mike module, the user may easily a control command even without manipulation such as a button or a rotary knob.

A speaker 70 may be provided to output a current state or an alarm in the cooking device as voice. Therefore, the speaker 70 may be considered as a portion of the UI. The speaker 70 of the cooking device may output a confirmation message for a voice command of the user as voice. That is, a voice output for confirming a voice command or a voice output for performing the received voice command may be performed through the speaker.

The controller 90 controls the operation of the cooking device based on a command of a user, which is input through the UI or the mike module 50.

The controller 90 may include an artificial intelligence (AI) module 91. The AI module 91 may be provided separately from the controller to perform wired and wireless communication with the controller. The controller may control the operation of the cooking device based on the output of the AI module. AI module is a module 91 equipped with advanced computer programs based on human intelligence, which uses a logical way of thinking, thinking, learning, and judging like a human being in a computer. In some implementations, the AI module 91 may correspond to one or more processors. In other implementations, the AI module 91 may correspond to software components configured to be executed by one or more processors.

The controller 90 may include a memory 92. The memory 92 may be provided separately from the controller to perform wired and wireless communication with the controller.

The controller may include a voice recognition module 93. The voice recognition module 93 may be provided separately from the controller to perform wired and wireless communication with the controller. The voice command of the user, which is received through the mike module 50, may be recognized and analyzed by the voice recognition module. The voice recognition module 93 is a module in which a computer converts an acoustic speech signal obtained through a sound sensor such as a microphone into words or sentences.

The cooking device 100 may be connected with an external server 1 by communication. To this end, the cooking device may include a communication module 60. As the cooking device is connected with the external server by communication, the cooking device may transfer the image generated through the camera module and its related information to the external server.

For example, the image generated after cooking is finished may be matched with information related to a cooking history. That is, it is possible to check a cooking process of a cooking target. For example, information such as a kind of a cooking target, a cook name, a cooking course, a cooking temperature and time condition may be matched with a cooking image. An image at a start step of cooking or an image in the middle of cooking as well as the image generated after cooking is finished may be generated, and may be matched with its related information. Therefore, as cooking experiences are accumulated through the cooking device 100, image and related information may be accumulated.

Also, the cooking device 100 may download an image and related information through a server. That is, the cooking device 100 may easily receive cooking experiences of another cooking device, which are accumulated in the server.

Therefore, the user may use the cooking device very effectively by easily receiving cooking experiences and information of other users through the same cooking device.

Meanwhile, the server 1 may be a server that provides voice recognition. In this case, the voice recognition module does not need to be fixed to the cooking device. That is, the voice command received through the mike module of the cooking device may be transferred to the server 1, and the server may recognize and analyze the voice command.

Therefore, since the cooking device does not need a complicated and expensive module for voice recognition and analysis, the cooking device is able to be cost effective, wherein user satisfaction may be enhanced.

The user may use various remote services such as remote control or monitoring of the cooking device through the external terminal 2. That is, the external terminal 2 interworking with the cooking device may be connected with the cooking device by communication through the server.

An application associated with the cooking device is installed in the external terminal, and the user may use various remote services by executing the application. Generally, the external terminal has a display of high picture quality. Also, the external terminal has a speaker and a mike module. Therefore, the speaker, the mike module and the display of the external terminal may enable extension of the UI of the cooking device.

In other words, a voice command for the cooking device, a display of a cooking target image, and a confirmation voice output or cooking execution voice output for a cooking command may be implemented through the external terminal.

The user may use various remote services such as a cooking state, a cooking condition, a cooking prediction time, a cooking prediction image, a cooking command, and a cooking condition change through the external terminal in a state that the user is far away from the cooking device. For example, the user may input a cooking command with his/her voice through the external terminal. Also, the user may input cooking parameters including a cooking temperature and a cooking time with his/her voice through the external terminal. Therefore, the UI of the cooking device may be extended to the external terminal.

If the cooking command or the cooking parameter is received through the external terminal, the controller controls the operation of the cooking device based on the received cooking command or cooking parameter. That is, the controller may control driving of the camera mode, the heating module and the AI module.

Meanwhile, the AI module may output an image (cooking prediction image) of a cooking target predicted after cooking is finished by using the cooking command or the cooking parameter received through the UI of the cooking device or the external terminal as an input. The cooking prediction image may be any one of images generated by the camera module and then stored in the memory, or may be any one of images updated through the server.

The cooking prediction image that may optimally be matched with a current cooking command or a cooking parameter may be output, whereby the user may determine whether his/her input of the cooking command or the cooking parameter is optimal.

In another aspect, the user may input the cooking command or the cooking parameter through the cooking prediction image. That is, the cooking prediction image is matched with information such as the cooking command or the cooking parameter. Therefore, selection of a specific cooking prediction image may be the same as selection of information such as a specific cooking command or cooking parameter.

For example, if an image of a cooking target which is well-done is selected, it may be considered that information on a cooking history is selected. Therefore, the user may easily select a cooking command or a cooking parameter by excluding selection of a complicated and inconvenient cooking command or cooking parameter. That is, the user may perform these processes at one time by selecting only one image.

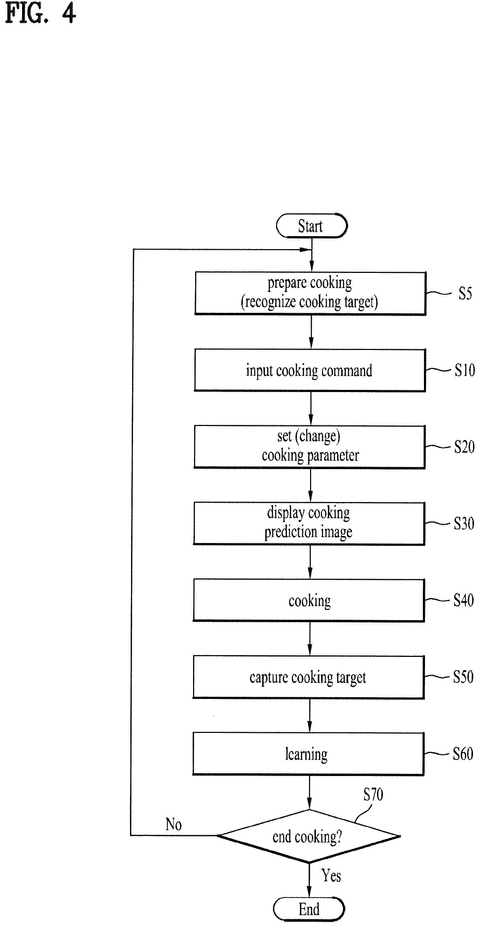

Hereinafter, a method for controlling a cooking device according to one embodiment of the present disclosure will be described in detail with reference to FIG. 4.

The user may perform an input step (S10) of a cooking command or a setting step (S20) of a cooking parameter through the UI, the mike module or the external terminal. The setting step of the cooking parameter may be intended to change the cooking parameter set by the cooking command.

A step S5 of recognizing the cooking target may be performed before, in the middle of, and after the setting step S20 of the cooking parameter. Recognition of the cooking target may be performed in such a manner that the camera module generates an image by capturing the cooking target. Recognition of the cooking target may be performed in the process of preparing cooking. The process of preparing cooking may be considered as the process of inserting the cooking target into the cooking device by means of the user. Also, the process of preparing cooking may include applying a power source of the cooking device.

If the cooking command the cooking parameter are set, the cooking prediction image may be displayed (S30). As the cooking prediction image, a specific cooking prediction image may be displayed in accordance with a current cooking command and a cooking parameter. The result of previous learning may be displayed, and the image stored in the memory may be displayed. Preferably, the cooking prediction image is an image corresponding to the recognized cooking target.

For example, if a user cooks "grilled chicken", a chicken image prior to cooking may be generated, whereby the cooking target may be recognized. In this case, it is preferable that a cooking prediction image corresponding to "grilled chicken" is selected and displayed. A cooking level may be checked through the cooking prediction image, and may be varied depending on a previously input cooking command and cooking parameter.

Therefore, the user may predict the cooking level through the cooking prediction image. For example, if the user wants a well-done cook, the user may change the cooking parameter. At this time, the user may provide a command "cook it more" through his/her voice. The cooking device may increase a cooking time by recognizing this voice command and/or vary a cooking level by increasing the cooking temperature.

Meanwhile, if selection of the user ends, cooking (S40) may be performed. As cooking is performed, capturing (S50) of the cooking target may be performed repeatedly or periodically. Cooking history information (cooking command or cooking parameter, change transition of the cooking parameter, etc.) up to a capturing time may be acquired. Therefore, a generated image and this related information may be matched with each other and stored.

That is, the cooking prediction image may be devised through learning by using a cooking condition as an input. This learning result may be used for the aforementioned display (S30) of the cooking prediction image. For example, a cooking prediction image most similar to the current cooking condition may be output from images of the same cooking target and then displayed.

For example, the cooking prediction image which is displayed may be changed. This may be a request of the user. In other words, if the user changes the cooking condition in the middle of cooking, the cooking prediction image corresponding to the changed cooking condition may be displayed. A cooking prediction image more suitable for the current cooking condition may be displayed in the middle of cooking.

Meanwhile, the user may select a specific cooking prediction image after recognizing a cooking target. For example, a plurality of corresponding cooking prediction images may be displayed after the cooking target is recognized. The cooking prediction images may be displayed in due order, and the user may select any one of the cooking prediction images by manipulating a scroll or button.

Selection of a specific cooking prediction image may be considered as selection of a cooking condition. This is because that the cooking condition is matched with the specific cooking prediction image. Therefore, as the specific cooking prediction image is selected, processes such as selection of a cooking command and setting of a cooking parameter may be simplified. That is, the user does not need to recognize and select a detailed and complicated condition such as a cooking time or a cooking temperature.

If the user selects a specific cooking prediction image, a corresponding cooking condition may be displayed, and especially a predicted cooking time may be displayed.

The user determines whether cooking ends in such a way of determining whether a cooking set time passes or cooking ends forcibly (S70). If cooking does not end, the aforementioned steps may be repeated. If a cooking end condition is satisfied, cooking may end.

Meanwhile, the cooking prediction images may be stored separately depending on a cooking level. That is, the cooking targets may be stored by being classified into rare, medium and well-done. This may be intended to effectively correspond to an emotional user's voice command.

The cooking level may be classified based on a color difference or change of the cooking targets.

If there is a specific image corresponding to the cooking prediction image in the images stored in the memory, the AI module may output the specific image as a cooking prediction image. For example, if there are ten cooking prediction images in accordance with a cooking level, a cooking prediction image having a seventh cooking level may be output for a voice command "cook it well-done". Afterwards, if the user provides a voice command "cook it more", a cooking prediction image having an eighth cooking level may be output. If the user continues to enhance a cooking level, a cooking prediction image having a tenth cooking level may finally be output. If the user wants a higher cooking level, a cooking prediction image corresponding to the higher cooking level is not output. Therefore, the image generated after cooking is finished may be used as a new cooking prediction image having an eleventh cooking level.

According to this embodiment, the user may perform an increase or decrease command of a relative cooking level based on the cooking prediction image through the mike module. The controller or the voice recognition module may identify and recognize the increase or decrease command of the relative cooking level. A cooking prediction image changed in response to this command may be displayed. The cooking prediction image may be displayed through the cooking device or the external terminal. Therefore, the cooking device which may be used intuitively and easily may be provided.

Therefore, according to this embodiment, the cooking prediction image may be extended and diversified. That is, an evolved cooking prediction image may be provided based on the user's experiences. Therefore, a customized cooking device may be provided, and a smart and convenient cooking device may be provided.

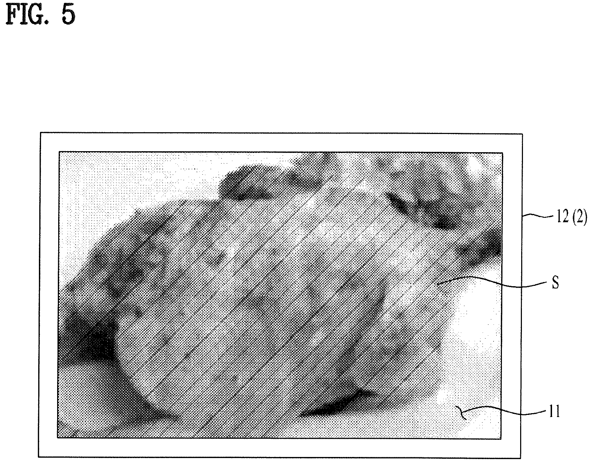

Hereinafter, embodiments for cooking prediction images will be described in detail with reference to FIGS. 5 to 7.

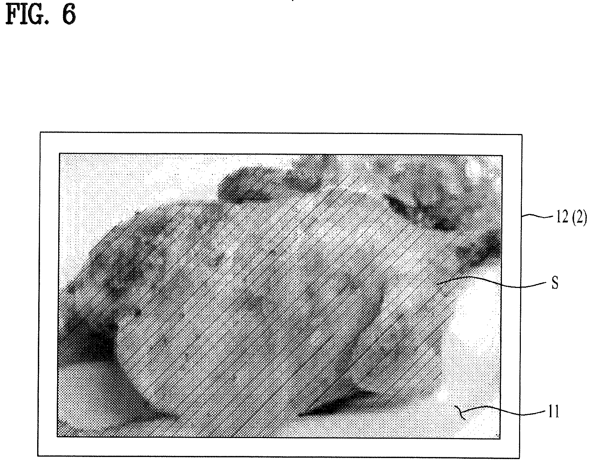

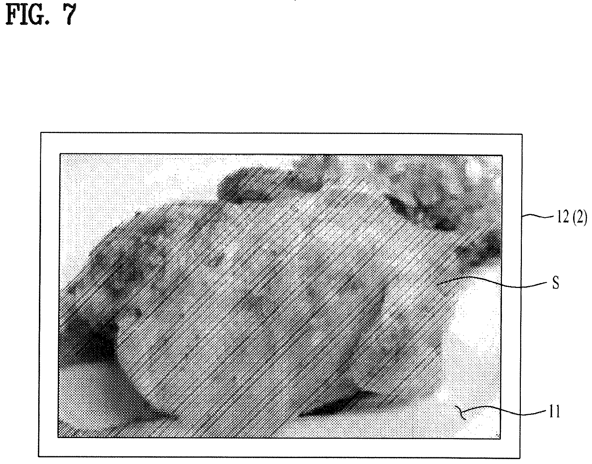

Cooking prediction images for the same cooking target are shown in FIGS. 5 to 7. An example of a cooking prediction image corresponding to "rare" is shown in FIG. 5, an example of a cooking prediction image corresponding to "medium" is shown in FIG. 6, and an example of a cooking prediction image corresponding to "well-done" is shown in FIG. 7.

The cooking level may be checked through a color change of the cooking target. The color change of the cooking target may be diversified depending on the cooking target. For example, the cooking level may be higher for a darker red or darker brown.

The image shown in FIG. 6 is the cooking prediction image, and may be displayed. The user may replace setting of a cooking command and a cooking parameter by selecting the image.

If the user wants to cook food more before cooking or in the middle of cooking, the user may perform a change of the cooking parameter. If the user commands "cook it more" through his/her voice command, the cooking prediction image may be displayed by being changed to the image shown in FIG. 7.

If the cooking device checks the change of the command through a voice or display, the user may provide a command for granting the change of the command through the UI or voice.

The controller changes and sets the cooking parameter as matched with the changed cooking prediction mage, and performs cooking based on the changed cooking parameter.

Meanwhile, the cooking prediction image may be displayed or the cooking command may be provided (changed) through the external terminal.

The user may remotely control or monitor the cooking device at a position spaced apart from the cooking device through the external terminal. That is, the external terminal may perform communication with the server, and the server may perform communication with the cooking device, whereby these steps may be performed.

Therefore, the user may easily use the cooking device even without directly manipulating the cooking device or approaching the cooking device.

### Industrial Applicability

Industrial applicability is described in the present disclosure.

## Claims

1. A cooking device comprising:
a cavity (11) provided to accommodate a cooking target;
a camera module (30) configured to capture a first image of the cooking target accommodated in the cavity (11);
a heating module (40) configured to heat the cooking target;
an interface configured to receive an input including a cooking command or a cooking parameter including a cooking temperature and a cooking time;
an artificial intelligence, AI, module (91) configured to output a second image of the cooking target based on the received input received through the interface, wherein the second image is a predicted image of the cooking target after cooking is finished, to enable the user to check a
current cooking level related to a degree of doneness for the cooking target, through the currently captured first image and the predicted second image; and
a controller (90) configured to control the camera module (30), the heating module (40), and the AI module (91) based on the received input,
the predicted image is any one of the images generated by the camera module (30), subsequently stored,
wherein the predicted image is derived through learning by using a cooking condition as the input.

2. The cooking device of claim 1, further comprising a memory (92) controlled by the controller (90) and configured to store the captured first image of the cooking target in the memory (92).

3. The cooking device of claim 2, wherein the controller (90) is further configured to:
classify a plurality of images of a same cooking target based on a respective cooking level according to a color change of the cooking target; and
store the plurality of images in the memory (92).

4. The cooking device of claim 1, wherein the AI module (91) is further configured to output a specific image from a plurality of images stored in the memory (92) as the second image, wherein the specific image is selected for outputting based on a determination that the specific image is associated with a same cooking level as the received input.

5. The cooking device of claim 1, wherein the interface is further configured to display the second image.

6. The cooking device of claim 5, further comprising a microphone configured to receive the input via a voice of a user.

7. The cooking device of claim 6, wherein the input is recognized as a command to increase or decrease a cooking level from the voice of the user received via the microphone.

8. The cooking device of claim 7, wherein the controller (90) is further configured to reset a current cooking parameter based on the recognized command.

9. The cooking device of claim 5, wherein the interface is further configured to display a modified image of the second image when the cooking command or the cooking parameter is changed.

10. The cooking device of claim 9, wherein the interface is further configured to display a changed cooking time corresponding to the modified image of the second image.

11. The cooking device of claim 5, wherein the received input corresponds to a selection of one of a plurality of images displayed via the interface.

12. The cooking device of claim 1, further comprising a communication module (60) configured to transmit the second image to an external terminal (2).

13. The cooking device of claim 12, wherein a change of a cooking command or a cooking parameter is received from the external terminal (2) via the communication module (60).

14. The cooking device of claim 1, further comprising a communication module (60) configured to deliver a training result of the AI module (91) to an external server (1).

15. The cooking device of claim 1, further comprising a communication module (60) configured to update a previous training result from an external server (1).

## Patentansprüche

1. Kochvorrichtung, die aufweist:
einen Hohlraum (11), der zur Aufnahme eines Kochobjekts vorgesehen ist;
ein Kameramodul (30), das konfiguriert ist, ein erstes Bild des in dem Hohlraum (11) aufgenommenen Kochobjekts aufzunehmen;
ein Heizmodul (40), das konfiguriert ist, das Kochobjekt zu erwärmen;
eine Schnittstelle, die konfiguriert ist, eine Eingabe zu empfangen, die einen Kochbefehl oder einen Kochparameter einschließlich einer Kochtemperatur und einer Kochzeit umfasst;
ein künstliches Intelligenz, KI, Modul (91), das konfiguriert ist, ein zweites Bild des Kochobjekts basierend auf der über die Schnittstelle empfangenen Eingabe auszugeben,
wobei das zweite Bild ein vorhergesagtes Bild des Kochobjekts nach Abschluss des Kochens ist, um es dem Benutzer zu ermöglichen, einen aktuellen Kochgrad in Bezug auf die Garstufe des Kochobjekts anhand des aktuell aufgenommenen ersten Bildes und des vorhergesagten zweiten Bildes zu überprüfen; und
eine Steuerung (90), die konfiguriert ist, das Kameramodul (30), das Heizmodul (40) und das KI-Modul (91) basierend auf der empfangenen Eingabe zu steuern,
das vorhergesagte Bild eines der Bilder ist, die vom Kameramodul (30) erzeugt und anschließend gespeichert werden,
wobei das vorhergesagte Bild durch Lernen unter Verwendung einer Kochbedingung als Eingabe hergeleitet wird.

2. Kochvorrichtung nach Anspruch 1, die ferner einen Speicher (92) aufweist, der durch die Steuerung (90) gesteuert wird und konfiguriert ist, das aufgenommene erste Bild des Kochobjekts im Speicher (92) zu speichern.

3. Kochvorrichtung nach Anspruch 2, wobei die Steuerung (90) ferner konfiguriert ist, um:
mehrere Bilder desselben Kochobjekts basierend auf einem jeweiligen Kochgrad gemäß einer Farbänderung des Kochobjekts zu klassifizieren; und
die mehreren Bildern im Speicher (92) zu speichern.

4. Kochvorrichtung nach Anspruch 1, wobei das KI-Modul (91) ferner konfiguriert ist, ein bestimmtes Bild aus mehreren im Speicher (92) gespeicherten Bildern als das zweite Bild auszugeben, wobei das bestimmte Bild basierend auf einer Bestimmung, dass das bestimmte Bild mit demselben Kochgrad wie die empfangene Eingabe verknüpft ist, zur Ausgabe ausgewählt wird.

5. Kochvorrichtung nach Anspruch 1, wobei die Schnittstelle ferner konfiguriert ist, das zweite Bild anzuzeigen.

6. Kochvorrichtung nach Anspruch 5, die ferner ein Mikrofon aufweist, das konfiguriert ist, die Eingabe über die Stimme eines Benutzers zu empfangen.

7. Kochvorrichtung nach Anspruch 6, wobei die Eingabe als ein Befehl, einen Kochgrad zu erhöhen oder zu verringern, aus der über das Mikrofon empfangenen Stimme des Benutzers erkannt wird.

8. Kochvorrichtung nach Anspruch 7, wobei die Steuerung (90) ferner konfiguriert ist, einen aktuellen Kochparameter basierend auf dem erkannten Befehl zurückzusetzen.

9. Kochvorrichtung nach Anspruch 5, wobei die Schnittstelle ferner konfiguriert ist, ein modifiziertes Bild des zweiten Bildes anzuzeigen, wenn der Kochbefehl oder der Kochparameter geändert wird.

10. Kochvorrichtung nach Anspruch 9, wobei die Schnittstelle ferner konfiguriert ist, eine geänderte Kochzeit anzuzeigen, die dem modifizierten Bild des zweiten Bildes entspricht.

11. Kochvorrichtung nach Anspruch 5, wobei die empfangene Eingabe einer Auswahl eines von mehreren über die Schnittstelle angezeigten Bildern entspricht.

12. Kochvorrichtung nach Anspruch 1, die ferner ein Kommunikationsmodul (60) aufweist, das konfiguriert ist, das zweite Bild an ein externes Endgerät (2) zu übertragen.

13. Kochvorrichtung nach Anspruch 12, wobei eine Änderung eines Kochbefehls oder eines Kochparameters von dem externen Endgerät (2) über das Kommunikationsmodul (60) empfangen wird.

14. Kochvorrichtung nach Anspruch 1, die ferner ein Kommunikationsmodul (60) aufweist, das konfiguriert ist, ein Trainingsergebnis des KI-Moduls (91) an einen externen Server (1) zu liefern.

15. Kochvorrichtung nach Anspruch 1, die ferner ein Kommunikationsmodul (60) aufweist, das konfiguriert ist, ein vorheriges Trainingsergebnis von einem externen Server (1) zu aktualisieren.

## Revendications

1. Dispositif de cuisson, comprenant :
une cavité (11) prévue pour recevoir une cible de cuisson ;
un module de caméra (30) prévu pour capturer une première image de la cible de cuisson reçue dans la cavité (11) ;
un module de chauffage (40) prévu pour chauffer la cible de cuisson ;
une interface prévue pour recevoir une entrée comprenant une instruction de cuisson ou un paramètre de cuisson comprenant une température de cuisson et un temps de cuisson ;
un module d'intelligence artificielle AI (91), prévu pour sortir une deuxième image de la cible de cuisson sur la base de l'entrée reçue via l'interface, ladite deuxième image étant une image prévue de la cible de cuisson une fois la cuisson terminée, afin de permettre à l'utilisateur de vérifier un degré de cuisson actuel relatif à un degré de finition de la cible de cuisson, au moyen de la première image capturée et de la deuxième image prévue ; et
un contrôleur (90) prévu pour commander le module de caméra (30), le module de chauffage (40) et le module AI (91) sur la base des données reçues,
l'image prévue étant une des images générées par le module de caméra (30), stockée ultérieurement,
l'image prévue étant déduite par apprentissage au moyen d'une condition de cuisson en tant qu'entrée.

2. Dispositif de cuisson selon la revendication 1, comprenant en outre une mémoire (92) commandée par le contrôleur (90) et prévue pour le stockage en mémoire (92) de la première image capturée de la cible de cuisson.

3. Dispositif de cuisson selon la revendication 2, où le contrôleur (90) est en outre prévu pour :
classer une pluralité d'images d'une même cible de cuisson sur la base du degré de cuisson respectif en fonction d'une variation de couleur de la cible de cuisson ; et stocker la pluralité d'images en mémoire (92).

4. Dispositif de cuisson selon la revendication 1, où le module AI (91) est en outre prévu pour sortir une image spécifique d'une pluralité d'images stockées en mémoire (92) en tant que deuxième image, ladite image spécifique étant sélectionnée pour la sortie sur la base d'une détermination que l'image spécifique est associée au même degré de cuisson que l'entrée reçue.

5. Dispositif de cuisson selon la revendication 1, où l'interface est en outre prévue pour afficher la deuxième image.

6. Dispositif de cuisson selon la revendication 5, comprenant en outre un microphone prévu pour recevoir l'entrée via la voix d'un utilisateur.

7. Dispositif de cuisson selon la revendication 6, où l'entrée est reconnue comme une instruction d'élévation ou de réduction d'un degré de cuisson à partir de la voix de l'utilisateur reçue via le microphone.

8. Dispositif de cuisson selon la revendication 7, où le contrôleur (90) est en outre prévu pour réinitialiser un paramètre de cuisson actuel sur la base de l'instruction reconnue.

9. Dispositif de cuisson selon la revendication 5, où l'interface est en outre prévue pour afficher une image modifiée de la deuxième image si l'instruction de cuisson ou le paramètre de cuisson sont modifiés.

10. Dispositif de cuisson selon la revendication 9, où l'interface est en outre prévue pour afficher un temps de cuisson modifié correspondant à l'image modifiée de la deuxième image.

11. Dispositif de cuisson selon la revendication 5, où l'entrée reçue correspond à une sélection d'une image parmi une pluralité d'images affichées via l'interface.

12. Dispositif de cuisson selon la revendication 1, comprenant en outre un module de communication (60) prévu pour transmettre la deuxième image à un terminal externe (2).

13. Dispositif de cuisson selon la revendication 12, où une modification d'une instruction de cuisson ou d'un paramètre de cuisson est reçue du terminal externe (2) via le module de communication (60).

14. Dispositif de cuisson selon la revendication 1, comprenant en outre un module de communication (60) prévu pour transmettre un résultat d'apprentissage du module AI (91) à un serveur externe (1).

15. Dispositif de cuisson selon la revendication 1, comprenant en outre un module de communication (60) prévu pour mettre à jour un résultat d'apprentissage précédent d'un serveur externe (1).
